# EUROPEAN PATENT SPECIFICATION

(11) **EP 1 658 170 B1**
(45) Date of publication and mention of the grant of the patent: **09.05.2012**
(21) Application number: 04781948.7
(22) Date of filing: 20.08.2004
(51) Int. Cl.: B29C 65/16, B29C 65/00, B32B 27/08, B32B 27/20, C08L 23/10, C08L 51/06

(54) **Methods for laser welding articles molded from polyolefins to those molded from other thermoplastic resins, and welded articles prepared therefrom**
Verfahren zum Laserschweissen von aus Polyolefinen geformten Artikeln an aus anderen thermoplastischen Harzen geformten Artikeln und dadurch hergestellte geschweisste Artikel
Procedes de soudage au laser d'articles moules a partir de polyolefines a des articles moules a partir d'autres resines thermoplastiques et articles soudes obtenus par ces procedes

(30) Priority: 22.08.2003 US 497253 P
(43) Date of publication of application: 24.05.2006
(73) Proprietor: E.I. DU PONT DE NEMOURS AND COMPANY, Wilmington, DE 19898 (US)
(72) Inventor: KOSHIDA, Reiko, Utsonomiya, Tochigi 321-0953 (JP)
(74) Representative: Morf, Jan Stefan
(86) International application number: PCT/US2004/027358
(87) International publication number: WO 2005/018915

(56) References cited:
- WO-A-01/68365

## Description

### BACKGROUND OF THE INVENTION

It is known in the art to join together two molded parts made from polymer resins where one part (the "transparent" part) is at least partially transparent to a laser beam at a given wavelength and the other part absorbs a significant portion of incident light at that wavelength (the "opaque" part), by positioning them to contact along adjoining surfaces, irradiating the surface of the transparent part with a laser beam at the given wavelength such that at least a portion of the laser energy is transmitted to the junction of the transparent and opaque parts, causing the polymer at the junction of the two parts to be melted and joined together. This technique is commonly referred to as "laser welding". Several advantages flow from laser welding. For example, laser welding offers simple operation, attendant labor savings, improvement in productivity, and reduction of production cost. The technique is useful in a wide variety of applications including the preparation of molded articles used in automobile applications.

It is also a known advantage of laser welding that it can be conducted between resins having different melting points; see for example Japanese Kokai 2001-152985.

When selecting thermoplastic resins for laser welding, the materials chosen for each part are typically miscible with each other. There are disadvantages and difficulties associated with attempting to laser weld together two molded parts made of different thermoplastic resins that are not miscible with each other. In such an effort, as for example when welding two parts made of different thermoplastic resins that are to some degree not miscible with each other, it is known to position an alloy of these different thermoplastic resins at the junction of the two parts being welded together. Such alloys are typically derived by melt compounding the thermoplastic resins with an additional material that serves to compatibilize the thermoplastic resins. Then a laser beam is focused on the junction of the parts to be welded such that the two parts are joined together through the alloy, which functions as an adhesive. See for example Japanese Kokai 2002-18961. Further, Japanese Kokai 2002-284895 discloses a laser welded article made from an opaque part that is made of an alloy of the resin of the transparent part and another resin that is not miscible with the resin of the transparent part. WO 01/68365 A discloses a method for the preparation of laser welded articles comprising two parts, wherein a first part made of polyolefin is welded to a second part made of a composition comprising a polyamide and a compatibilising agent, typically an ionomer resulting from the copolymerisation of ethylene with acrylic or methacrylic acid.

Thus, a longstanding problem in the field of laser welding has been the difficulty in using the technique to join parts made from different, immiscible thermoplastic materials without also using an additional, compatibilizing, material at the junction between the parts where welding is to occur. The use of such a material adds to the complexity and cost of the process. Moreover, the use of a compatibilizing material can lead to welded parts that have worse overall physical properties than welded parts made from mutually miscible thermoplastic resins.

It is therefore an object of the present invention to provide polyolefin compositions suitable for laser welding with polyamide or other thermoplastic components, and without resorting to the incorporation of alloys. A feature of the invention is the adaptation of a process suitable for laser welding of dissimilar materials. An advantage of the invention is the satisfactory weld strength achieved with such a laser welded material. These and other objects, features and advantages of the invention will become better understood and appreciated upon having reference to the detailed description of the invention herein.

### SUMMARY OF THE INVENTION

Processes for laser welding articles made polyolefin/modified polyolefin blends to articles made from other thermoplastic resins and the resulting laser welded articles are disclosed. More specifically, there is disclosed a method for the preparation of laser welded articles of polyolefins and different thermoplastic resins, comprising:
(a) Blending together 80 to 99 weight percent of a first polyolefin; and 1 to 20 weight percent of a second polyolefin modified with a carboxylic acid, a carboxylic acid anhydride, and/or an epoxy group, based on the total weight of said first polyolefin and said second modified polyolefin;
(b) molding the resulting blend into one or more desired articles;
(c) preparing one or more additional articles of at least one different thermoplastic resin;
(d) positioning said articles (b) and said articles (c) in a desired arrangement, such that they contact one another along common surfaces thereof; and
(e) laser welding said articles (b) to said articles (c) along said common surfaces thereof; wherein either the one or more articles of [b] or the one or more articles [c] at least partially absorbs light at a selective wavelength used for laser welding.

It is preferred that either one of (a) or (c) contains a laser absorbing additive such as carbon black, nigrosine, aniline black, or phthalocyanine compounds.

The invention will become better understood upon having reference to the drawings herein.

### BRIEF DESCRIPTION OF THE DRAWINGS

**FIGURE 1** is a graphical depiction of laser weld strength of a composition according to the invention and a comparative composition, versus laser power;
**FIGURE 2** is a graphical depiction of laser weld strength of another composition according to the invention and another comparative composition, versus laser power; and
**FIGURE 3** is a typical configuration of laser transmissive and laser absorptive parts aligned for laser welding operations.
**FIGURES 4**, **5**, and **6** are a side elevation, top plan view and a perspective view, respectively, of a test piece 11 for measuring weld strength as reported herein.
**FIGURE 7** is a perspective view of test pieces 11', a relatively transparent object and 11", a relatively opaque object, having their respective faying surfaces in contact and placed in position for a laser welding.

### DETAILED DESCRIPTION OF THE INVENTION

The laser weldable polyolefin materials used in the present invention have certain transmission and absorption coefficients for light at a given wavelength which enable them to be shaped into a desired component and then laser welded with another thermoplastic component molded from different thermoplastic resins (and which have different transmission and absorption coefficients for light at a given wavelength from the first thermoplastic component). This results in an article of manufacture made from the two components laser welded together and exhibiting satisfactory weld strength, without adversely affecting the respective properties of the thermoplastic resins selected for joinder. Articles joined in this manner and made from more than two thermoplastic components are also contemplated.

Processes for accomplishing the aforementioned laser welding of at least two thermoplastic components are also disclosed. The two or more components are positioned in contact with each other and a predetermined amount of laser beam energy is transmitted to the area of contact, causing polymer at the junction to be melted and the two components to be joined together. This produces an article with satisfactory weld strength, and in which the respective properties of thermoplastic resins are not adversely affected. The use of polypropylenes in this process is particularly attractive.

The thermoplastic resins that are laser welded to the polyolefin resins using the process of the present invention may include polyamides, polyesters, and the like as are commonly used in making a molded product. As examples of suitable polyamide resins utilized in the present invention, condensation products of dicarboxylic acids and diamines, condensation products of aminocarboxylic acids, and ring-opening polymerization products of cyclic lactams can be cited. Mixtures of the foregoing types of monomers may also be used. As examples of dicarboxylic acids, adipic acid, azelaic acid, sebacic acid, dodecanedioic acid, isophthalic acid and terephthalic acid can be cited. As examples of diamines, tetramethylenediamine, hexamethylenediamine, octamethylenediamine, nonamethylenediamine, dodecamethylenediamine, 2-methylpentamethylenediamine, 2-methyloctamethylenediamine, trimethylhexamethylenediamine, bis(*p*-aminocyclohexyl)methane, *m*-xylylenediamine, and *p*-xylylenediamine may be cited. As an example of an aminocarboxylic acid, 11-aminododecanoic acid can be cited. As examples of cyclic lactam, caprolactam and laurolactam can be cited. As specific examples of condensation products and ring-opening polymerization products, aliphatic polyamides such as nylon 6, nylon 66, nylon 46, nylon 610, nylon 612, nylon 11, nylon 12, semi-aromatic polyamides such as poly(*m*-xylylene adipamide) (nylon MXD6), poly(hexamethylene terephthalamide) (nylon 6T), poly(hexamethylene isophthalamide) (nylon 61) and poly(nonamethylene terephthalamide) (nylon 9T), and copolymers and mixtures of these polymers can be cited. As the examples of the copolymers, nylon 6/66, nylon 66/6I, nylon 6I/6T and nylon 66/6T can be cited.

Polyester compositions useful with the present invention comprise at least one polyester and optionally various additives and components, as described below. The polyesters preferably include polymers having an inherent viscosity of 0.3 or greater and which are, in general, linear saturated condensation products of glycols and dicarboxylic acids, or reactive derivatives thereof. Preferably, they will comprise condensation products of aromatic dicarboxylic acids having 8 to 14 carbon atoms and at least one glycol selected from the group consisting of neopentyl glycol, cyclohexane dimethanol and aliphatic glycols of the formula HO(CH₂)ₙOH where n is an integer of 2 to 10. Up to 50 mole percent of the aromatic dicarboxylic acids can be replaced by at least one different aromatic dicarboxylic acid having from 8 to 14 carbon atoms, and/or up to 20 mole percent can be replaced by an aliphatic dicarboxylic acid having from 2 to 12 carbon atoms. Hydroxycarboxylic acids such as *p*-hydroxybenzoic acid may also be used to make the polyester.

Preferred polyesters include poly(ethylene terephthalate); poly(1,4-butylene terephthalate); 1,4-cyclohexylene dimethylene terephthalate/isophthalate copolymer; and other linear homopolymer esters derived from aromatic dicarboxylic acids and glycols. Preferred aromatic dicarboxylic acids include isophthalic acid; bibenzoic acid; naphthalene dicarboxylic acids including the 1,5- ,2,6-, and 2,7-naphthalenedicarboxylic acids; 4,4'diphenylenedicarboxylic acid; bis(*p*-carboxyphenyl) methane; ethylene-bis-*p*-benzoic acid; 1,4-tetramethylene bis(*p*-oxybenzoic acid); ethylene bis(*p*-oxybenzoic) acid; and 1,3-trimethylene bis(*p*-oxybenzoic) acid. Preferred glycols include those selected from the group consisting of 2,2-dimethyl-1,3-propane diol; neopentyl glycol; cyclohexane dimethanol; and aliphatic glycols of the general formula HO(CH₂)ₙOH where n is an integer from 2 to 10, e.g., ethylene glycol; 1,3-trimethylene glycol; 1,4-tetramethylene glycol; 1,6-hexamethylene glycol; 1,8-octamethylene glycol; 1,10-decamethylene glycol; 1,3-propylene glycol; and 1,4-butylene glycol. Up to 20 mole percent, as indicated above, of preferably adipic, sebacic, azelaic, dodecanedioic acid or 1,4-cyclohexanedicarboxylic acid can be present.

The most preferred polyester compositions of the invention are based on poly(ethylene terephthalate) homopolymers, poly(butylene terephthalate) homopolymers, poly(ethylene terephthalate)/poly(butylene terephthalate) copolymers, poly(ethylene terephthalate) copolymers, poly(ethylene terephthalate)/poly(butylene terephthalate) mixtures and/or mixtures thereof, although any other polyesters can be used as well, either alone or in any combination with any of the polyesters described herein.

The polyester compositions of the invention may contain one or more nucleating agents preferably in an amount of up to 1 weight percent, more preferably in an amount of up to 0.7 weight percent, and even more preferably up to 0.4 weight percent, based on the total weight of the polyester composition.

Because of their excellent properties, polyolefins that are polymers of linear olefins containing from 2 to 8 carbon atoms, such as ethylene, propylene, 1-butene, 1-pentene, 1-hexene and 1-octene, are preferred for use in the present invention. The polyolefins may be selected from homopolymers of the aforementioned olefins and from copolymers of these olefins. Particularly preferred are copolymers of ethylene or propylene with one or more comonomers. Homopolymer and copolymers of propylene are more preferred.

The process of the present invention will use a blend of an 80 to 99 weight percent of a first polyolefin and 1 to 20 weight percent of a second polyolefin modified with a compatibilizing agent such as an acid anhydride, dicarboxylic acid or derivative thereof, carboxylic acid or derivative thereof, and/or an epoxy group. The compatibilizing agent may be introduced by grafting an unsaturated acid anhydride, dicarboxylic acid or derivative thereof, carboxylic acid or derivative thereof, and/or an epoxy group to a polyolefin. The compatibilizing agent may also be introduced while the polyolefin is being made by copolymerizing with monomers containing an unsaturated acid anhydride, dicarboxylic acid or derivative thereof, carboxylic acid or derivative thereof, and/or an epoxy group. The compatibilizing agent preferably contains from 3 to 20 carbon atoms. Examples of typical compounds that may be grafted to (or used as comonomers to make) a polyolefin are acrylic acid, methacrylic acid, maleic acid, fumaric acid, itaconic acid, crotonic acid, citrconic acid, maleic anhydride, itaconic anhydride, crotonic anhydride and citraconic anhydride. The selection of monomer depends *inter alia* on the properties of interest in the end article to be formed by the laser welding technique. Maleic anhydride is most particularly preferred.

Preferably the second, modified, polyolefin has a substantially lower molecular weight than that of the unmodified polyolefin in the compositions of this invention.

One such modified polyolefin suitable for the purposes of the invention is commercially available as Licomont® AR504 from Clariant.

The polyolefin/modified polyolefin blend and other thermoplastic used in the present invention may further contain conventional amounts of one or more inorganic fillers and/or reinforcing agents. These might include for example, fibrous reinforcement such as glass fiber and carbon fiber, glass beads, talc, kaolin, wollastonite and mica. Preferable among them is glass fiber. Glass fibers suitable for use in the present invention are those generally used as a reinforcing agent for thermoplastic resins and thermosetting resins.

One or more optional compounds selected from a wide variety of compounds tailored for different applications of the resin compositions can be contained in the polyolefin/modified polyolefin blend and the thermoplastic resin that is to be laser welded to the polyolefin/modified polyolefin blend. Typically, additive compounds can include flame-retardants, impact modifiers, viscosity modifiers, heat resistance improvers, lubricants, antioxidants and UV-and other stabilizers. Such additives may be used in amounts that do not harm the properties of the polyolefin/modified polyolefin blend and the thermoplastic resin.

It is often desired that articles made by laser welding two parts have a single color in order that the articles give a substantially homogeneous visible impression. This is important, for example, in automotive applications. Thus the polyolefin/modified polyolefin blend and other thermoplastic used in the invention may contain colorants. Preferred are black colorants. Preferred black colorants for the opaque part are carbon black, nigrosine, or aniline black, which absorb light in the wavelengths that are typically used for laser welding. When it is desired that it be black, the transparent part will preferably contain 0.01 to 1 weight percent of a black colorant that is not carbon black or nigrosine. The amount of the colorant used may vary and will be determined by the requirements of individual applications. The black colorant added to the polyolefin/modified polyolefin blend and other thermoplastic used to make the transparent part will preferably show absorption in the visible light region (400-700 nm) and at least partially transmit light at a wavelength in the 800-1200 nm region that is emitted by YAG and/or diode lasers that are typically used for laser welding. All dyes that have at least a partial absorption in the visible light region (400-700nm) and at least a partial transmittance at a wavelength between 800-1200 nm that is emitted by a laser (such as a YAG or diode laser) that can be used for laser welding can be used as a colorant. Black dyes are preferred. Two or more dyes may be blended to give articles with the desired colors.

The polyolefin/modified polyolefin blend used in the present invention can be obtained by blending all of the component materials using any blending method. These blending components in general are preferably made homogeneous as much as possible. Polyolefin and modified polyolefin can be cube blended at a temperature below the melting temperature of the components. Alternatively, they can be melt-mixed to homogeneity using a mixer such as a blender, kneader, Banbury mixer, roll extruder, etc. to give a resin composition. Or, part of the materials may be mixed in a mixer, and the rest of the materials may then be added and further mixed until homogeneous. Alternatively, the materials may be dry-blended in advance, and a heated extruder is then used to melt and knead until homogeneous, and then to extrude in a needle shape, followed by cutting to a desirable length to become granulates.

Molding of the polyolefin/modified polyolefin blend and other thermoplastic used in the present invention into the articles to be used for laser welding can be carried out according to methods known to those skilled in the art. Preferred are generally utilized molding methods such as injection molding, extruding molding, compression molding, foaming molding, blow molding, vacuum molding, injection blow molding, rotation molding, calendar molding and solution casting molding.

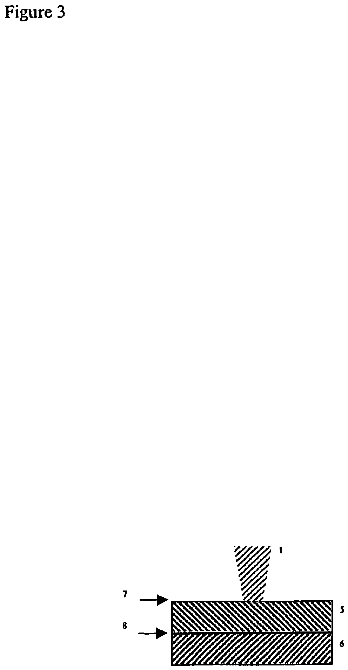

Having reference to **FIGURE 3** herein, there is shown an illustration of a conventional laser welding arrangement. A laser beam 1 is applied to the surface 7 of the first article 5, and then transmitted through the first article 5 to the second article 6. First article 5 and second article 6 join in region 8. This region 8 is melted through absorption of the laser energy 1 and the articles 5 and 6 are pressed together, resulting in weld formation. The thermoplastic components selected for laser welding (here, articles 5 and 6) must have different transmission and absorption coefficients from the polyolefin/modified polyolefin blend at the wavelength used for laser welding.

Preferably, a laser welded article comprises at least one plastic part (second article 6) having a suitable absorption rate for use in laser welding (the "absorption part") and at least one plastic part (first article 5) made from the composition selected by the above-described thermoplastic resins (the "transmission part"). Any "absorption part" may be laser welded to any "transmission part" at one or more interfaces and can be made of different thermoplastic resin from that of the transmission part. More preferably, the laser welded article comprises more than one "absorption part" and more than one "transmission part" and a multiplicity of interfaces among the parts, that is, any part may be laser welded to any other part or parts at one or more interfaces. The parts, of course, may be different in shape, size, dimension, and compositions. The part made from the polyolefin/modified polyolefin blend may be either the transmission part or the absorption part. When the part made from polyolefins and modified polyolefins is the transmission part, the part made from the other thermoplastic will be the absorption part and when the part made from the polyolefin/modified polyolefin blend is the absorption part, the part made from the other thermoplastic will be the transmission part.

The preferred laser for use in making laser welded articles of our invention is any laser having a wavelength within the range of 800 nm to 1200 nm. Examples of types of preferred lasers are YAG and diode lasers. The invention will become better understood upon having reference to the following Examples and Comparative Examples. Particularly preferred lasers are also described therein.

### EXAMPLES

### Laser Welding

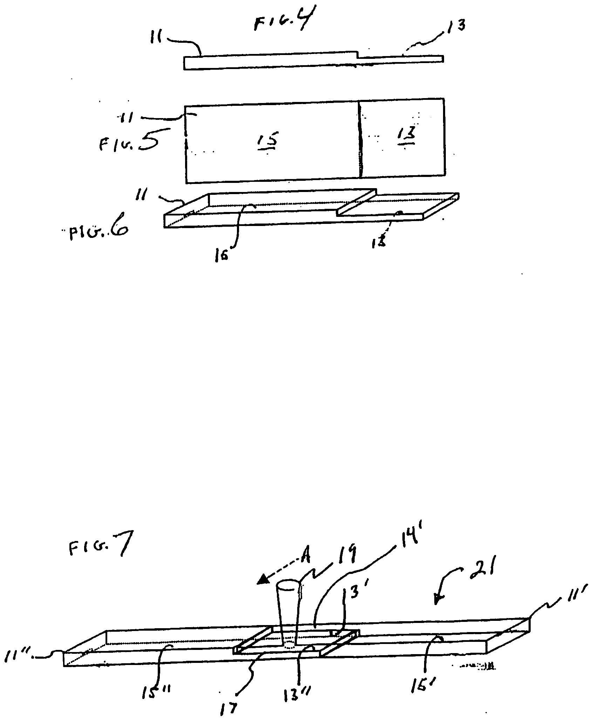

Referring now to the drawings and in particular **FIGURES 4** - **6**, there is disclosed the geometry of the test pieces 11 used to measure weld strength as reported herein. The test pieces 11 are generally rectangular in shape, having dimensions of 80 mm X 18 mm X 4 mm and a 20 mm deep half lap at one end. The half lap defines a faying surface 13 and a shoulder 15.

Referring now to **FIGURE 7**, there is illustrated a pair of test pieces, 11' and 11" with the dimensions of 11, that are, respectively, a relatively transparent polymeric object and a relatively opaque polymeric object. The faying surfaces 13' and 13" of pieces 11' and 11" have been brought into contact so as to form a juncture 17 therebetween. Relatively transparent piece 11' defines an impinging surface 14' that is impinged by laser radiation 19 moving in the direction of arrow A. Laser radiation 19 passes through relatively transparent piece 11' and irradiates the faying surface 13" of relatively opaque piece 11", causing pieces 11' and 11" to be welded together at juncture 17, thus forming a test bar, shown generally at 21.

Test pieces 11' and 11" were then welded together as described above, with a clamped pressure of 0.3 MPa therebetween to form test bars 21. Laser radiation was scanned in a single pass across the width of test pieces 11' and 11 at 400 cm/min with a Rofin-Sinar Laser GmbH 940 nm DLx50S diode laser operating at a variety of power settings. The laser radiation was directed to the sample through an optical fiber and focused on the sample using an optical lens. The welding spot had a diameter of 3 mm.

The force required to separate test pieces 11' and 11" was determined using a Shimadzu Autograph AG-20kND instrument operating at 2 mm/minute. The shoulders of the test bars 21 were clamped and tensile force was applied tensile force in the longitudinal direction of the test bars 21.

### Comparative Example 1 and Example 1

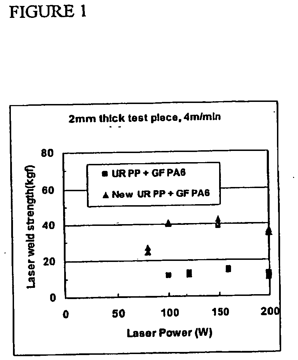

In the following Comparative Example and Example, 2 mm thick test pieces of materials were prepared. In Comparative Example 1, unreinforced polypropylene copolymer (J830, available from Mitsui-Sumitomo Polyolefin) (abbreviated "UR PP") was laser-welded to an unreinforced nylon 6 (prepared by dry blending 99.2 weight percent "Zytel7335F" available from E.I. du Pont de Nemours and Company., Wilmington, DE, with 0.8 weight percent of a master batch containing 20 weight percent carbon black and 80 weight percent nylon 6 before molding into test bars) (abbreviated "GF PA6"). Laser welding was done at a variety of laser power settings as described above. The resulting weld strengths are plotted as a function of laser power in **FIGURE 1**. As can be seen, in all instances the laser weld strength is less than 20 kgf.

In Example 1, 3 weight percent of low molecular weight polypropylene modified with maleic anhydride (Licomont® AR504 available from Clariant) was cube blended with the unreinforced polypropylene used in Comparative Example 1 before molding the test pieces (yielding a new unreinforced polypropylene abbreviated "New UR PP"). These polypropylene/modified polypropylene test pieces were laser welded to test pieces made from with the same GR PA6 as was used in Comparative Example 1 using various laser powers and same conditions as were used in Comparative Example 1. The resulting weld strengths are plotted as a function of laser power in **FIGURE 1**. As can be seen, in all instances the laser weld strength is greater than 20 kgf (and predominantly tested at or over 40 kgf).

### Comparative Example 2 and Example 2

The same procedures that were used in Comparative Example 1 and Example 1 were used in Comparative Example 2 and Example 2.

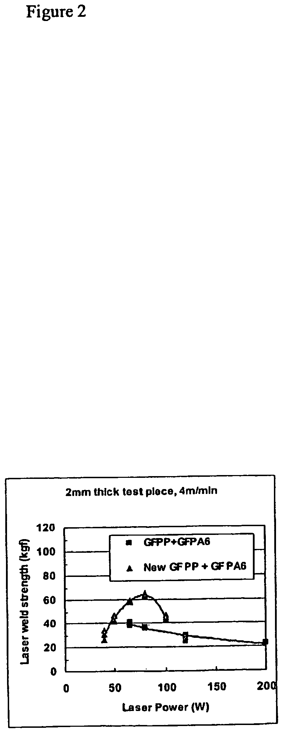

In Comparative Example 2, unmodified polypropylene copolymer containing 20 weight percent glass fibers (V7000, available from Mitsui-Sumitomo Polyolefin) (abbreviated "GF PP") was laser-welded to a glass reinforced nylon 6 prepared by melt-blending 68 weight percent nylon 6; 1.4 weight percent of a master batch containing 40 weight percent nigrosine and 60 weight percent nylon 6; 0.4 weight percent of a master batch containing 20 weight percent carbon black and 80 weight percent nylon 6; 0.05 weight percent copper iodide; and 30 weight percent glass fibers, wherein all the ingredients except the glass fibers were dry-blended and fed to main feed throat and the glass fibers were side-fed. Laser welding was done at a variety of laser power settings as described above. In the case of Comparative Example 2, the glass-reinforced polypropylene is abbreviated as "GF PP." The weld strengths are plotted as a function of laser power in **FIGURE 2**. As can be seen, in all instances the laser weld strength is between about 20 and 40 kgf.

In Example 2, 3 weight percent of low molecular weight polypropylene modified with maleic anhydride (Licomont® AR504 available from Clariant) was cube blended with the reinforced polypropylene used in Comparative Example 2 before molding the test pieces (yielding a new unreinforced polypropylene abbreviated "New GF PP"). These test pieces were laser welded to test pieces prepared from the polyamide used in Comparative Example 2. The weld strengths are plotted as a function of laser power in **FIGURE 2**. As can be seen, in most instances the laser weld strength is greater than 40 kgf (and in some instances tested at above 60 kgf).

## Claims

1. A method for the preparation of laser welded articles of polyolefins and different thermoplastic resins, comprising:
(a) blending together 80 to 99 weight percent of a first polyolefin; and 1 to 20 weight percent of a second polyolefin modified with a carboxylic acid, a carboxylic acid anhydride, and/or an epoxy group, based on the total weight of said first polyolefin and said second modified polyolefin;
(b) molding the resulting blend into one or more desired articles;
(c) preparing one or more additional articles of at least one different thermoplastic resin;
(d) positioning said articles (b) and said articles (c) in a desired arrangement, such that they contact one another along common surfaces thereof; and
laser welding said articles (b) to said articles (c) along said common surfaces thereof, wherein either the one or more articles of [b] or the one or more articles [c] at least partially absorbs light at a selective wavelength used for laser welding.

2. The method according to Claim 1, wherein said different thermoplastic resin is one or more polyamides.

3. The method according to Claim 1, wherein said different thermoplastic resin is one or more polyesters.

4. The method according to Claim 1, wherein said first polyolefin comprises a black colorant suitable for molding transparent articles for laser welding.

5. The method according to Claim 1, wherein said second polyolefin comprises a black colorant suitable for molding transparent articles for laser welding.

6. The method according to Claim 1, wherein said different thermoplastic resin comprises a black colorant suitable for molding transparent articles for laser welding.

7. The method according to claim 4, wherein the black colorant is nigrosine, aniline black, and/or carbon black.

8. The method according to claim 5, wherein the black colorant is nigrosine, aniline black, and/or carbon black.

9. The method according to claim 6, wherein the black colorant is nigrosine, aniline black, and/or carbon black.

10. The method of claim 1, wherein the first polyolefin, second polyolefin, and/or thermoplastic resin contains one or more inorganic fillers and/or reinforcing agents.

11. The method of claim 10 wherein the fillers and/or reinforcing agents are one or more of glass fibers, carbon fibers, glass beads, talc, kaolin, wollastonite, and mica.

12. A product made according to the process of Claim 1.

## Patentansprüche

1. Verfahren zur Herstellung von lasergeschweißten Artikeln aus Polyolefinen und anderen Thermoplastharzen, umfassend:
(a) das Zusammenmischen von 80 bis 99 Gewichtsprozent eines ersten Polyolefins; und von 1 bis 20 Gewichtsprozent eines zweiten Polyolefins, das mit einer Carbonsäure, einem Carbonsäureanhydrid und/oder einer Epoxygruppe modifiziert ist, auf das Gesamtgewicht des ersten Polyolefins und des zweiten modifizierten Polyolefins bezogen;
(b) das Formen der so gebildeten Mischung zu einem oder mehreren erwünschten Artikeln;
(c) das Herstellen eines oder mehrerer zusätzlicher Artikel aus mindestens einem anderen Thermoplastharz;:
(d) das Positionieren der Artikel (b) und der Artikel (c) in eine erwünschte Anordnung, derart, dass sie einander gemeinsamen Flächen davon entlang kontaktieren; und
das Laserschweißen der Artikel (b) an die Artikel (c) den gemeinsamen Flächen davon entlang, wobei entweder der eine oder die mehreren Artikel von (b) oder der eine oder die mehreren Artikel (c) mindestens teilweise Licht bei einer zum Laserschweißen angewendeten selektiven Wellenlänge absorbiert/absorbieren.

2. Verfahren nach Anspruch 1, wobei das andere Thermoplastharz aus einem oder mehreren Polyamiden besteht.

3. Verfahren nach Anspruch 1, wobei das andere Thermoplastharz aus einem oder mehreren Polyestern besteht.

4. Verfahren nach Anspruch 1, wobei das erste Polyolefin ein schwarzes Farbmittel umfasst, das zum Formen durchsichtiger Artikel für das Laserschweißen geeignet ist.

5. Verfahren nach Anspruch 1, wobei das zweite Polyolefin ein schwarzes Farbmittel umfasst, das zum Formen durchsichtiger Artikel für das Laserschweißen geeignet ist.

6. Verfahren nach Anspruch 1, wobei das andere Thermoplastharz ein schwarzes Farbmittel umfasst, das zum Formen durchsichtiger Artikel für das Laserschweißen geeignet ist.

7. Verfahren nach Anspruch 4, wobei das schwarze Farbmittel Nigrosin, Anilinschwarz und/oder Ruß ist.

8. Verfahren nach Anspruch 5, wobei das schwarze Farbmittel Nigrosin, Anilinschwarz und/oder Ruß ist.

9. Verfahren nach Anspruch 6, wobei das schwarze Farbmittel Nigrosin, Anilinschwarz und/oder Ruß ist.

10. Verfahren nach Anspruch 1, wobei das erste Polyolefin, das zweite Polyolefin und/oder das Thermoplastharz einen oder mehrere anorganische Füllstoffe und/oder Verstärkungsmittel enthält.

11. Verfahren nach Anspruch 10, wobei die Füllstoffe und/der Verstärkungsmittel eines oder mehrere von Glasfasern, Kohlefasern, Glasperlen, Talk, Kaolin, Wollastonit und Glimmer sind.

12. Produkt, das dem Verfahren nach Anspruch 1 gemäß hergestellt wird.

## Revendications

1. Procédé de préparation d'articles de polyoléfines et de différentes résines thermoplastiques soudés par faisceau laser, comprenant:
(a) le mélange conjoint de 80 à 99 pour cent en poids d'une première polyoléfine; et de 1 à 20 pour cent en poids d'une seconde polyoléfine modifiée avec un acide carboxylique, un anhydride d'acide carboxylique, et/ou un groupe époxy, basé sur le poids total de ladite première polyoléfine et ladite seconde polyoléfine modifiée;
(b) le moulage du mélange résultant en un ou plusieurs article(s) souhaité(s);
(c) la préparation d'un ou plusieurs article(s) supplémentaire(s) d'au moins une résine thermoplastique différente;
(d) le positionnement desdits articles (b) et desdits articles (c) en une configuration souhaitée, de sorte qu'ils entrent en contact l'un avec l'autre le long de leurs surfaces communes; et
le soudage par faisceau laser desdits articles (b) auxdits articles (c) le long de leurs dites surfaces communes, dans lequel soit l'un soit plusieurs article(s) de (b) ou l'un ou plusieurs article(s) de (c) absorbe(nt) au moins partiellement la lumière à une longueur d'onde sélective utilisée pour le soudage par faisceau laser.

2. Procédé selon la revendication 1, dans lequel ladite résine thermoplastique différente est un ou plusieurs polyamide(s).

3. Procédé selon la revendication 1, dans lequel ladite résine thermoplastique différente est un ou plusieurs polyester(s).

4. Procédé selon la revendication 1, dans lequel ladite première polyoléfine comprend un colorant noir convenant au moulage d'articles transparents pour le soudage par faisceau laser.

5. Procédé selon la revendication 1, dans lequel ladite seconde polyoléfine comprend un colorant noir convenant au moulage d'articles transparents pour le soudage par faisceau laser.

6. Procédé selon la revendication 1, dans lequel ladite résine thermoplastique différente comprend un colorant noir convenant au moulage d'articles transparents pour le soudage par faisceau laser.

7. Procédé selon la revendication 4, dans lequel le colorant noir est la nigrosine, le noir d'aniline et/ou le noir de carbone.

8. Procédé selon la revendication 5, dans lequel le colorant noir est la nigrosine, le noir d'aniline et/ou le noir de carbone.

9. Procédé selon la revendication 6, dans lequel le colorant noir est la nigrosine, le noir d'aniline et/ou le noir de carbone.

10. Procédé selon la revendication 1, dans lequel la première polyoléfine, la seconde polyoléfine, et/ou la résine thermoplastique contiennent une ou plusieurs charge(s) inorganique(s) et/ou des agents de renfort.

11. Procédé selon la revendication 10, dans lequel les charges et/ou les agents de renfort sont une ou plusieurs fibre(s) de verre, fibre(s) de carbone, bille(s) de verre, talc, kaolin, wollastonite, et mica.

12. Produit fabriqué selon le procédé selon la revendication 1.
